# FASCICULE DE BREVET EUROPEEN

(11) **EP 0 454 545 B1**
(45) Date de publication et mention de la délivrance du brevet: **04.01.1995**
(21) Numéro de dépôt: 91401017.8
(22) Date de dépôt: 17.04.1991
(51) Int. Cl.: F41F 7/00, F41F 3/048, B64G 1/64

(54) **Dispositif d'assemblage mécanique temporaire et de séparation rapide d'un objet à éjecter lié à un support**
Vorrichtung zur zeitlich begrenzten mechanischen Ankuppelung sowie zur raschen Trennung eines an einem Träger befestigten abstossbaren Gegenstandes
Device for the temporal mechanical assembly and for its fast separation of an ejecting object attached to a support

(30) Priorité: 27.04.1990 FR 9005450
(43) Date de publication de la demande: 30.10.1991
(73) Titulaire: AEROSPATIALE Société Nationale Industrielle, 75781 Paris Cédex 16 (FR)
(72) Inventeur: Spariat, Jacques, F-33160 Saint Medard en Jalles (FR); Aubret, Jean-Pierre, 170, rue Pasteur, F-33200 Bordeaux (FR); Barriere, Michel, F-33160 Saint Medard en Jalles (FR)
(74) Mandataire: Rinuy, Santarelli

(56) Documents cités:
- EP-A- 0 296 936
- EP-A- 0 365 377
- US-A- 3 643 545
- US-A- 4 554 905
- PATENT ABSTRACTS OF JAPAN vol. 011, no. 188 (M-599)(2635) 17 juin 1987,& JP-A-62 013861 (TOYODA MACH WORKS LTD) 22 janvier 1987,& JP-A-62013861 figures

## Description

L'invention concerne l'assujettissement temporaire d'un objet à un support, la séparation rapide de cet objet vis à vis du support, et son éjection avec une vitesse d'orientation précise, notamment pour son lancement sans guidage extérieur.

Elle se place avantageusement, mais de façon non exclusive, dans le domaine des engins spatiaux, tels que satellites, où interviennent des opérations de séparation/éjection ; l'invention peut toutefois s'appliquer également à divers engins terrestres, maritimes (navires de surface ou sous-marins) et aériens (aéronefs en tous genres) dans lesquels on établit une liaison temporaire que l'on souhaite supprimer à un quelconque moment donné, avec mise en mouvement prompte et précise de l'objet considéré (par exemple pour son lancement sans guidage extérieur).

C'est ainsi que l'invention peut notamment s'appliquer à la réalisation d'expériences scientifiques dans la haute atmosphère terrestre ou à l'exploration des planètes du système solaire à partir d'une sonde automatique. Elle peut par exemple servir à éjecter un réservoir contenant une substance chimique destinée à servir de traceur pour étudier les vents ou champs magnétiques : il est ainsi possible d'éjecter un tel réservoir à partir d'une plate-forme artificielle, telle qu'une fusée- sonde ou une sonde planétaire.

On connaît déjà divers mécanismes assurant un tel assujettissement temporaire suivi d'une séparation rapide avec une éjection plus ou moins forte, pour assurer au moins une bonne séparation relative entre l'objet et son support.

On peut ainsi citer notamment les documents US-4.554.905, WO-82/02527, US-3.887.150, US-2.888.294, US-3.196.745, US-3.597.919, US-4.002.120 ou US-4.187.759.

En pratique ces documents proposent d'utiliser une énergie de déverrouillage ou de séparation du type pression. Cette énergie peut être par exemple pneumatique, hydraulique ou pyrotechnique suivant les utilisations. Dans le cas particulièrement important d'une énergie pyrotechnique, on tire profit des effets pneumatiques produits par la combustion d'une substance explosive.

Une énergie de type pyrotechnique se retrouve également dans des dispositifs de séparation du type : boulons explosifs, découpeurs à charge ou systèmes pyrotechniques de déverrouillage par effacement d'une butée. Ils leur sont le plus souvent associés des pistons d'écartement.

Dans leur ensemble les divers documents précités ne se préoccupent guère du mouvement ultérieur de l'objet.

On connaît par ailleurs le document FR-A-2.616.856 corréspondant au document EP-A-296936 qui vise un mécanisme permettant de commander l'écartement d'une pièce par rapport à son support avec lequel elle est initialement en contact, en maitrisant parfaitement la vitesse et l'accélération d'éjection. Ce document enseigne pour cela comment appliquer à l'objet à éjecter une quantité d'énergie bien définie.

On connaît enfin d'après le document FR-2.550.756 un mécanisme spécifiquement destiné à l'éjection de sièges d'avion.

Toutefois, il est apparu que ces mécanismes sont incapables à eux seuls de contrôler avec précision l'amplitude et l'orientation de la vitesse d'éjection, compte tenu notamment de la non prise en compte des tolérances de fabrication des composants du mécanismes d'éjection et des tolérances de montage de l'objet sur son support.

Ainsi par exemple, dans le cas du dispositif prévu par le document FR-A2.616.856 corréspondant au document EP-A-296936 pui forme le préambule de la revendication indépendante 1, qui prévoit un piston destiné à éjecter l'objet considéré par poussée sur son culot, on constate que la qualité de l'éjection dépend de façon sensible des paramètres suivants :
- rigidité des pièces en présence, notamment du piston d'éjection et de ses éléments de guidage,
- précision de fabrication et de montage de ces éléments de guidage,
- position du centre de gravité par rapport à l'axe de poussée, voire coaxialité de ce dernier et d'un axe principal d'inertie de la pièce ou objet à éjecter, surtout si, comme l'envisage l'invention, on souhaite induire une rotation de l'objet autour de l'axe principal,
- qualité de réalisation de la butée du piston contre la pièce à éjecter.

Tout excentrement de l'axe de poussée par rapport à l'axe longitudinal du piston éjecteur (sur lequel est en pratique aligné autant que se peut le centre de gravité de l'objet considéré) se traduit par un moment sur le piston éjecteur qui, pour ne pas basculer sous l'effet de ce moment et ainsi provoquer une vitesse transverse sur l'objet, devra avoir une rigidité importante ainsi qu'une très grande précision sur son guidage.

Pour que le guidage soit efficace, il faut qu'il puisse reprendre tout moment dû à l'excentrement de l'axe de poussée avant que le mouvement de basculement de l'objet ne soit trop important.

Or un basculement même faible est suffisant pour créer une vitesse transverse parasite notable. Il est possible de quantifier les perturbations transverses (en vitesse linéaire et en rotation) en fonction du guidage.

La qualité de la butée de fin de course est, elle aussi, un élément très important sur la précision du mouvement ultérieur de l'objet. Cette influence a été mise en évidence par l'expérience, même avec des objets ayant une inertie transverse importante. Si la perpendicularité de l'axe de poussée et de la face d'appui de la butée sur l'objet en fin de course n'est pas rigoureuse, il se produit en fin de course un basculement du piston éjecteur qui transforme une partie de son énergie cinétique longitudinale en énergie de rotation transverse. Une partie de cette énergie peut être communiquée à l'objet or, comme indiqué ci-dessus, il en suffit d'une proportion infinitésimale pour communiquer à l'objet une vitesse transverse notable.

On constate ainsi que la qualité de l'éjection est directement liée à la qualité géométrique de l'éjecteur et à la répartition initiale des jeux.

Les principales conséquences sont : mise au point délicate, dispersions malgré tout importantes, modélisation de l'éjecteur très difficile (prise en compte des rigidités, des jeux, des chocs...)

L'invention vise, pour pallier les inconvénients précités, à obtenir un mécanisme fiable et simple assurant la triple fonction de verrouillage, de déverrouillage instantané et d'éjection avec une vitesse contrôlée, en minimisant les influences des incertitudes inévitables dans la fabrication et le montage des pièces du mécanisme et de l'objet par rapport à ce mécanisme et au support, ces fonctions étant commandées par une source d'énergie de tout type connu approprié (extérieure au mécanisme visé par l'invention) adaptée à fournir une quantité précise d'énergie de pression.

Le but recherché est donc l'éjection d'un objet, pièce ou masse avec une grande précision dans le mouvement obtenu soit, par rapport à l'axe longitudinal de l'objet :
- une vitesse longitudinale V_{L} donnée,
- une éventuelle vitesse de rotation longitudinale W_{R} donnée,
- une vitesse de rotation transverse (basculement) très faible (minimisée).

La fonction de verrouillage consiste à réaliser l'assemblage et la tenue mécanique de l'objet par rapport à son support même en ambiance sévère (vibrations notamment mais aussi parfois vide spatial...). Elle doit répondre à une grande précision de positionnement relatif entre ces deux pièces combinée avec une simplicité de liaison assurant une fiabilité de fonctionnement et de mise en oeuvre.

Le résultat à obtenir pour la fonction de déverrouillage est une désolidarisation instantanée des deux pièces sans perturber la phase d'éjection.

Le dispositif d'éjection rapide doit transmettre une accélération donnée à l'objet à éjecter par un effort de poussée engendrant uniquement, à la fin de l'éjection proprement dite (aux valeurs nominales), une vitesse longitudinale V_{L} avantageusement associée à une vitesse radiale W_{R} donnée.

De plus, pendant la phase d'éjection, l'objet éjecté ne doit pas vibrer en flexion. Le mécanisme d'éjection ne doit pas engendrer sur l'objet à éjecter de frottement parasite ou grippage. L'extérieur de l'objet éjecté ne doit pas subir d'agression lors de l'éjection.

Dans certaines applications le dispositif d'éjection doit permettre la mise en phase balistique de l'objet suivant une trajectoire prédéterminée à partir de l'engin de support (lorsque seule la gravitation régit le mouvement, ce dernier est de type EULER-POINSOT). Cette phase d'éjection doit donc initialiser pour l'objet éjecté un mouvement de caractéristiques V_{L}, W_{R} permettant de suivre une trajectoire balistique donnée, avec une vitesse de rotation transverse nominale ou très faible (ou angle de cône de Poinsot minimisé).

Pour parvenir au résultat précité, l'invention enseigne de transmettre la poussée au plus près du centre de gravité de l'objet à éjecter par l'intermédiaire d'un doigt de poussée en pratique plus long que les pistons d'éjection connus. Ceci a pour avantages une augmentation de la précision de centrage et une diminution de la vitesse parasite de rotation transverse due aux tolérances de fabrication et aux jeux de montage.

En effet, comme on l'a vu, les diverses perturbations inhérentes à tous mécanismes d'éjection donnent naissance à des vitesses de rotation transverse par un effet de bras de levier si leur point d'application est éloigné du centre de gravité. Or l'invention minimise les éventuels bras de leviers : les effets de ces perturbations sont minimisés et les effets restants se retrouvent essentiellement transformés en vitesse linéaire transverse (et non en rotation transverse).

Ainsi la force d'éjection F appliquée à l'objet à éjecter, se caractérise comme suit :
- sa direction et son sens sont déterminés par le guidage par le mécanisme d'éjection,
- son intensité est déterminée par la poussée du piston,
- son point d'application est au centre de gravité de l'objet à éjecter.

Plus précisément, l'invention propose un mécanisme d'assujettissement temporaire d'un objet à un support, de séparation et d'éjection de cet objet, comportant un réceptacle destiné à être fixé au support et une tige d'éjection montée coulissante dans ce réceptacle selon une direction prédéterminée, cette tige d'éjection comportant une portion arrière soumise à la pression régnant dans une chambre de pression du réceptacle destinée à être mise en communication avec une source de pression, et une extrémité avant en appui selon la direction prédéterminée contre une portée d'appui ménagée sur l'objet, caractérisé en ce que :
- cette portée d'appui est ménagée auprès du centre de gravité de l'objet, au fond d'un logement allongé ménagé dans l'objet, disposé coaxialement avec ladite direction prédéterminée, et dans lequel pénètre la tige d'éjection jusqu'à cette portée d'appui,
- le réceptacle comporte une portion terminale annulaire avant fixée à l'objet auprès de l'embouchure du logement et raccordée au corps de ce réceptacle par une zone frangible de liaison (c'est-à-dire, une zone de liaison apte à se rompre en un endroit déterminé),
- dans l'objet, sont ménagées, d'une part, une zone centrale de centrage avant située au fond du logement et dans laquelle pénètre avec au plus un faible jeu l'extrémité libre de la tige d'éjection, d'autre part une zone terminale de centrage arrière située auprès de l'embouchure du logement et dans laquelle pénètre avec un faible jeu une portion mâle de centrage arrière solidaire du corps du réceptacle.

Selon des dispositions préférées de l'invention, éventuellement combinées :
- la zone de liaison frangible ménagée entre la portion terminale annulaire avant du réceptacle fixée à l'objet et le corps de ce réceptacle comporte une bague intermédiaire respectivement reliée à la zone terminale annulaire d'une part, et au corps de réceptacle d'autre part par deux paires de languettes axiales flexibles appariées selon des diamètres décalés angulairement de 900, les languettes étant identiques dans chaque paire,
- les languettes de l'une des paires ont des résistances à la traction égales, inférieures aux résistances à la traction égales des languettes de l'autre paire,
- les languettes reliant la bague intermédiaire à la zone terminale annulaire avant ont des résistances à la traction égales, inférieures aux résistances à la traction égales des languettes reliant la bague intermédiaire au corps du réceptacle,
- les languettes des deux paires sont dimensionnées en sorte d'avoir le même comportement en flexion pour des déplacements transversaux de l'extrémité libre de la tige d'éjection qui sont égaux selon des directions radiales perpendiculaires,
- les languettes des deux paires ont des caractéristiques de flexion égales autour desdits diamètres selon lesquels ces languettes sont respectivement appariées,
- les languettes desdites deux paires ont une même épaisseur, mesurée transversalement aux dits diamètres et une même hauteur, mesurée parallèlement à la direction prédéterminée,
- les languettes de l'une des paires ont une même dimension radiale, inférieure à la dimension radiale commune des languettes de l'autre paire,
- la bague intermédiaire et les languettes font partie intégrante d'une partie au moins du corps du réceptacle comportant ladite portion terminale annulaire,
- la zone de liaison frangible comporte un triplet de languettes à casser identiques décalées angulairement de 120°, reliant la portion terminale annulaire avant du corps du réceptacle,
- ce dispositif comporte un organe élastique comprimé axialement entre une collerette prévue à l'intérieur du réceptacle et une portée prévue à la base de la tige d'éjection, mettant ainsi la zone de liaison frangible en précontrainte de traction,
- la portion terminale annulaire avant du réceptacle comporte une portion filetée extérieurement coopérant avec un filetage interne ménagé à l'embouchure du logement de l'objet,
- au travers de la paroi du réceptacle est fixé un ergot de guidage en rotation, pénétrant dans une rainure ménagée approximativement longitudinalement dans la tige d'éjection avec un angle d'inclinaison non nul par rapport à la direction prédéterminée,
- la tige d'éjection comporte en son extrémité libre un ergot de centrage pénétrant dans la zone centrale de centrage avant prévue au fond du logement de l'objet, venant en saillie par rapport à une portée annulaire en appui contre la zone d'appui du fond du logement,
- une pièce en matière souple est interposée entre l'extrémité de la tige d'éjection et la zone d'appui du fond du logement,
- cette pièce est une rondelle, par exemple indépendante, ou au contraire obtenue par un surmoulage de type élastomère, entourant un ergot de centrage ménagé en saillie par rapport à une portée annulaire ménagée à l'extrémité de la tige d'éjection,
- la rondelle est par exemple un joint torique, la zone d'appui au fond du logement étant tronconique,
- le logement est ménagé selon un axe principal d'inertie de l'objet,
- le logement est ménagé selon un axe longitudinal de symétrie géométrique de l'objet,
- la zone centrale de centrage avant a une dimension axiale représentant au plus 50 % de son diamètre intérieur, lequel est sensiblement égal au diamètre extérieur de l'extrémité libre de la tige d'éjection,
- la zone terminale de centrage arrière a une dimension axiale représentant au plus 50 % de son diamètre intérieur, lequel est sensiblement égal au diamètre de la portion mâle de centrage arrière.

Des objets, caractéristiques et avantages de l'invention ressortent de la description qui suit, donnée à titre d'exemple non limitatif, en regard des dessins annexés sur lesquels :
- la figure 1 est un schéma de principe d'un mécanisme de maintien temporaire, de séparation rapide et d'éjection d'un objet par rapport à un support, conforme à l'invention,
- la figure 2 en est une variante,
- la figure 3 est une vue en élévation, partiellement en coupe axiale, d'un mécanisme conforme au schéma de la figure 1,
- la figure 4 en est une vue en élévation, entièrement en coupe axiale, selon la ligne de coupe IV-IV de la figure 3,
- la figure 5 en est une vue en perspective,
- la figure 6 est une vue en coupe axiale d'un autre mécanisme selon une variante de réalisation de l'invention,
- la figure 7 est une vue partielle en perspective du réceptacle du mécanisme de la figure 5 sans la tige d'éjection,
- la figure 8 en est une vue en coupe axiale correspondant au détail VIII des figures 4 et 5,
- les figures 9 et 10 en sont des coupes selon les lignes IX-IX et X-X de la figure 8,
- la figure 11 est une vue partielle en coupe axiale selon la ligne XI-XI de la figure 12, montrant le sous-ensemble de guidage héli- coïdaI correspondant au détail XI de la figure 4,
- la figure 12 est une vue en élévation, sans la chemise qui entoure la tige d'éjection,
- la figure 13 est une vue agrandie du détail XIII de la figure 4,
- les figures 14A et 14B représentent les efforts de poussée appliqués respectivement sans et avec rondelle souple de recentrage de la poussée,
- la figure 15 est une variante de réalisation du détail de la figure 13,
- les figures 16 et 17 sont des vues schématiques des efforts appliqués à l'objet A à l'instant t = 0 puis au cours de l'éjection,
- la figure 18 est une vue partielle en coupe, analogue à la figure 8, représentant une variante préférée de centrage,
- la figure 19 est une vue axiale du détail XIX de la figure 6 représentant une variante de zone de liaison frangible, sans souplesse, et
- la figure 20 en est une vue en coupe transversale, selon la ligne XX-XX de la figure 19.

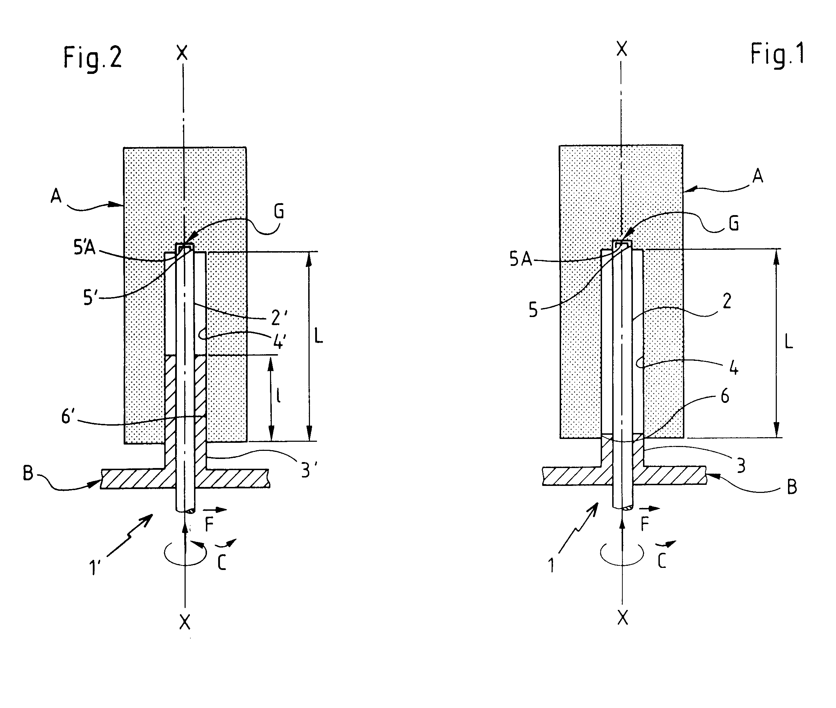

Les figures 1 et 2 représentent de façon schématique simplifiée deux mécanismes d'éjection 1 et 1' adaptés à éjecter avec précision un objet A initialement assujetti à un support B par des moyens non représentés ici pour des raisons de lisibilité mais qui seront explicités plus loin.

Les dispositifs 1 et 1' ont en commun de comporter une tige d'éjection 2 ou 2', coulissant dans un manchon de guidage 3 ou 3', solidaire du support B, et se prolongeant jusqu'au centre de gravité G de l'objet A, à la faveur d'un logement allongé 4 ou 4' ménagé à cet effet dans cet objet A.

Dans l'exemple représenté, le centre de gravité G de l'objet est représenté décalé axialement vis à vis du centre du rectangle par lequel a été schématisé l'objet A : ce dernier est en effet le plus souvent hétérogène.

De manière préférée, l'axe longitudinal de la tige d'éjection est confondu avec un axe principal d'inertie X-X de l'objet A, ici un axe longitudinal de symétrie de ce dernier.

L'objet A est centré en deux endroits décalés axialement, d'une part à proximité immédiate du centre G, par une portion de logement 5 ou 5', de courte dimension axiale, entourant avec faible jeu l'extrémité même de la tige d'éjection, d'autre part par une zone terminale 6 ou 6' du logement entourant avec faible jeu le manchon de guidage 3 ou 3'. A proximité immédiate du centre de gravité est prévue, au fond du logement, une zone 5A ou 5'A globalement transversale contre laquelle l'extrémité libre de la tige d'éjection vient en appui.

A la figure 1, qui correspond à un mode de réalisation préféré par l'invention, la distance axiale sur laquelle la zone de centrage 6 entoure avec faible jeu le manchon de guidage 3 est très courte, de l'ordre de quelques pour cents de la profondeur L du logement qui est donc ici la distance séparant axialement les zones 5 et 6.

A la figure 2 par contre le manchon 3' pénètre sur une plus grande distance, notée 1, dans le logement 4, sur environ la moitié de la profondeur L.

En fait, 1 peut représenter une fraction quelconque, inférieure à 1, de L. Il est toutefois apparu préférable de choisir 1 aussi petit que possible (par exemple moins de 50 % de la dimension transversale moyenne du manchon 3, à savoir son diamètre lorsque celui-ci est cylindrique). En effet, si la précision de guidage de la tige d'éjection dans le manchon 3' n'est pas parfaite, et si au cours de son mouvement cette tige d'éjection vient ainsi à avoir un quelconque mouvement transverse dû par exemple aux jeux de montage, le fait que le manchon 3' continue à assurer un centrage optimum du culot de l'objet au cours dudit mouvement induit une vitesse non négligeable de basculement dudit objet. Si par contre, comme c'est le cas à la figure 1, le centrage du culot de l'objet A disparaît dès le début du mouvement de la tige d'éjection, il apparaît tout au plus un déplacement transverse sans rotation de ce dernier.

Or, il apparaît en pratique que l'allongement du manchon 3' ne réduit pas sensiblement les risques de déplacement transverse de la tige d'éjection puisqu'il faut alors augmenter les jeux entre tige et manchon pour éliminer tous risques de grippage.

En pratique, l'invention prévoit d'appliquer à l'objet non seulement une poussée F mais aussi un couple de rotation C, c'est pourquoi le logement 4 ou 4' et la surface extérieure du manchon de guidage, au moins en regard de la zone terminale de centrage 6 ou 6', sont cylindriques. On peut par ailleurs, lorsque le mouvement de rotation est appliqué par la tige elle-même, donner à celle-ci une forme cylindrique éventuellement terminée par une extrémité de section polygonale, en conférant à la zone de centrage centrale 5 ou 5' une section de même forme. En variante toutefois cette extrémité et cette zone centrale de centrage peuvent également être cylindriques, le couple étant transmis à l'objet par tout moyen approprié, ne serait-ce que par frottement entre ladite extrémité et ladite zone centrale de guidage.

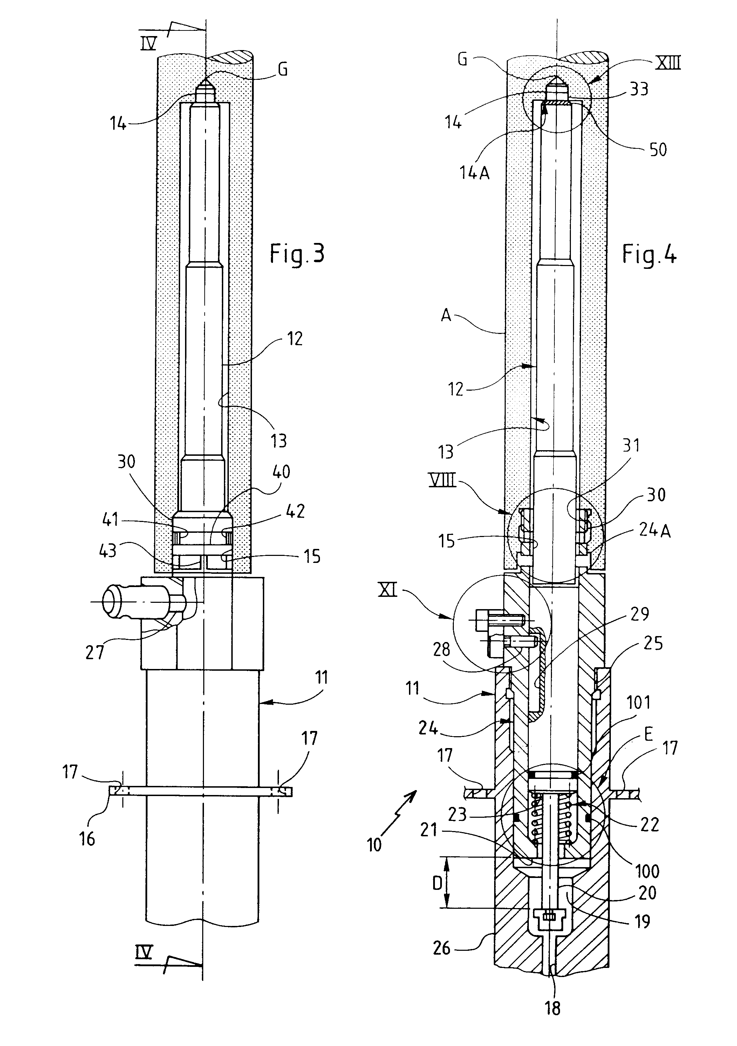

Un exemple de réalisation d'un mécanisme conforme au schéma de principe de la figure 1 est donné par les figures 3 à 5.

Ce mécanisme, noté 10 pour le distinguer de la version très schématiquement représentée à la figure 1, assure la triple fonction de maintien temporaire en une position précise, de séparation rapide et d'éjection contrôlée.

Ce mécanisme comporte principalement un réceptacle 11 de forme globalement cylindrique (dont la partie supérieure correspond au manchon de guidage 3), une tige d'éjection 12, (analogue à la tige 2 de la figure 1) et un logement allongé 13 (analogue à la référence 4 de la figure 1) au fond duquel sont prévues une zone centrale de centrage avant 14 (cf référence 5) et une portée transversale d'appui 14A, et près de l'embouchure duquel est prévu une zone terminale de centrage arrière 15 (cf référence 6).

Le réceptacle 11 est destiné à être fixé au support B, par tout moyen approprié, par exemple une collerette 16 (schématisée aux figures 3 et 4) munie d'alésages 17 adaptés au passage de boulons de fixation.

A la base de ce réceptacle est prévu un canal 18 communiquant avec une chambre de pression de tout type connu approprié munie en pratique d'un inflammateur de type pyrotechnique (pour la combustion d'une matière pyrotechnique). Ce canal aboutit dans une chambre 19 dans laquelle pénètre l'extrémité arrière rétrécie 20 du piston 12.

Ainsi qu'il apparaît dans le cercle noté E, ce réceptacle présente intérieurement une collerette en saillie interne 21 traversée par l'extrémité arrière 20 et contre laquelle un organe élastique 22, ici un ressort à spirale, vient axialement en appui. Celui-ci est par ailleurs en appui axialement contre une portée annulaire transversale 23 prévue à la base du piston, vis à vis de laquelle l'extrémité rétrécie 20 vient en saillie, au travers axialement du ressort 22.

Cette collerette interne 21 fait ici partie d'une chemise 24 pénétrant, en en étant solidaire par un filetage 25, dans un embout extérieur tubulaire 26 qui forme conjointement avec cette chemise le réceptacle 11.

Des joints d'étanchéité 100 et 101 sont prévus entre l'embout et la chemise, et entre la chemise et la base de la tige d'éjection.

Dans la paroi de cette chemise 24 pénètre radialement une goupille de sécurité 27 (voir figure 3) destinée, lorsqu'elle est en place et se prolonge radialement jusque dans un alésage transversal (non représenté) de la tige 12, à empêcher tout mouvement intempestif de cette tige. Cette goupille doit bien sûr être écartée radialement, par tout moyen connu approprié, préalablement à l'éjection de l'objet A.

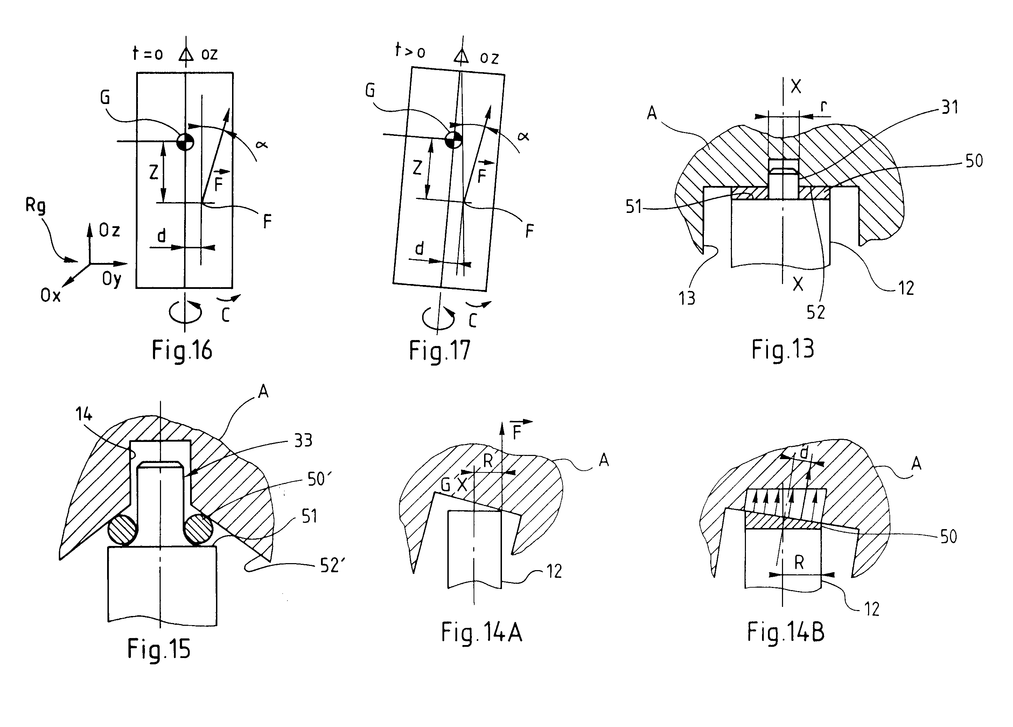

Ainsi que cela ressort également des figures 11 et 12, au travers de la paroi de la chemise 24 pénètre en outre un ergot 28 de guidage en rotation pénétrant dans une rainure approximativement longitudinale 29, soit rectiligne soit hélicoïdale, ménagée dans le piston avec un angle d'inclinaison y non nul par rapport à l'axe longitudinal X-X de la tige d'éjection (voir la figure 12). La dimension axiale de cette rainure est au moins égale à la course axiale D de la tige d'éjection.

A sa partie supérieure, la chemise 24 se termine par une portion rétrécie 24A terminée par un filetage extérieur 30 destiné à coopérer avec un filetage intérieur 31 ménagé à la base du logement 13.

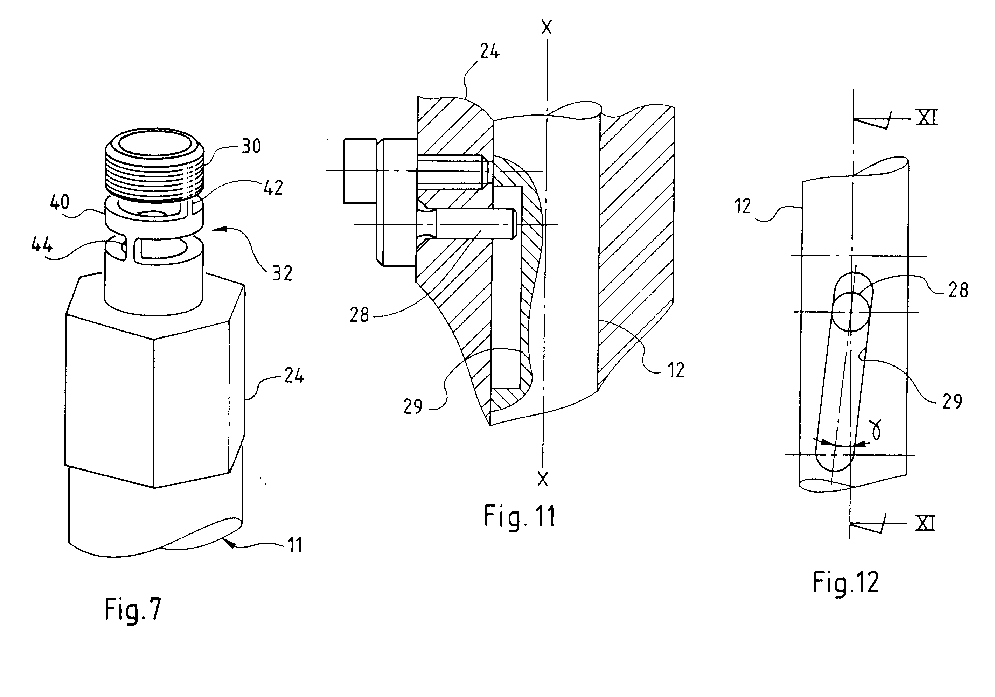

Une zone frangible (à casser) 32 est prévue entre cette portion filetée 30 et le reste de la chemise formant avec l'embout 26 le corps du réceptacle : cette zone frangible sera détaillée plus loin à propos des figures 7 à 10.

La tige d'éjection comporte plusieurs tronçons de plus en plus étroits dont le dernier est un ergot 33 pénétrant avec faible jeu dans la zone centrale de centrage 14.

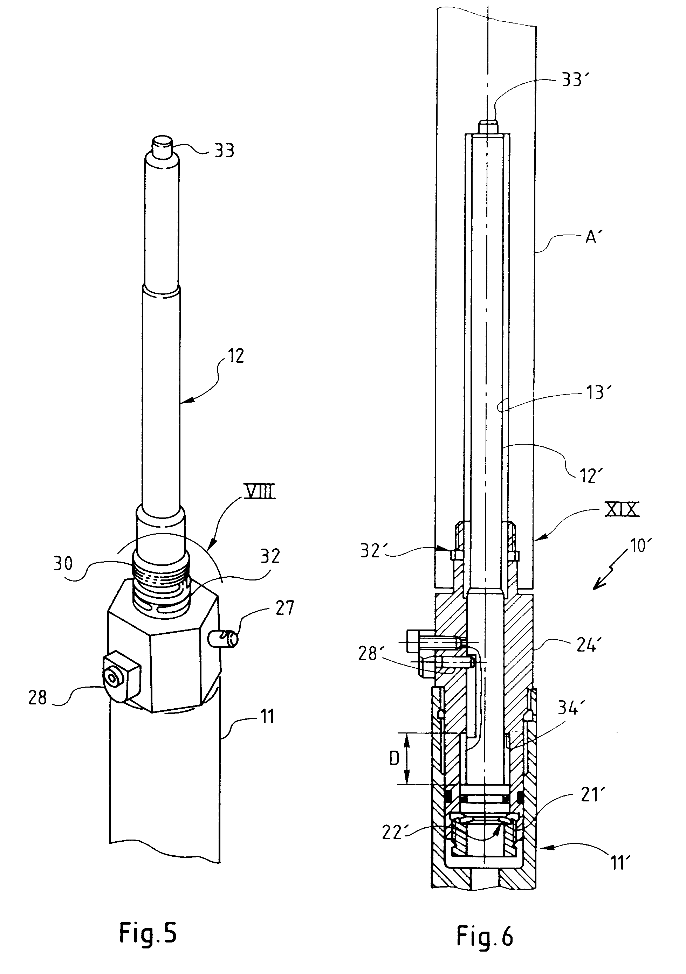

La figure 6 représente une variante de réalisation du mécanisme de la figure 4 dans laquelle des éléments similaires à ceux des figures 3 à 5 sont affectés d'un indice "prime".

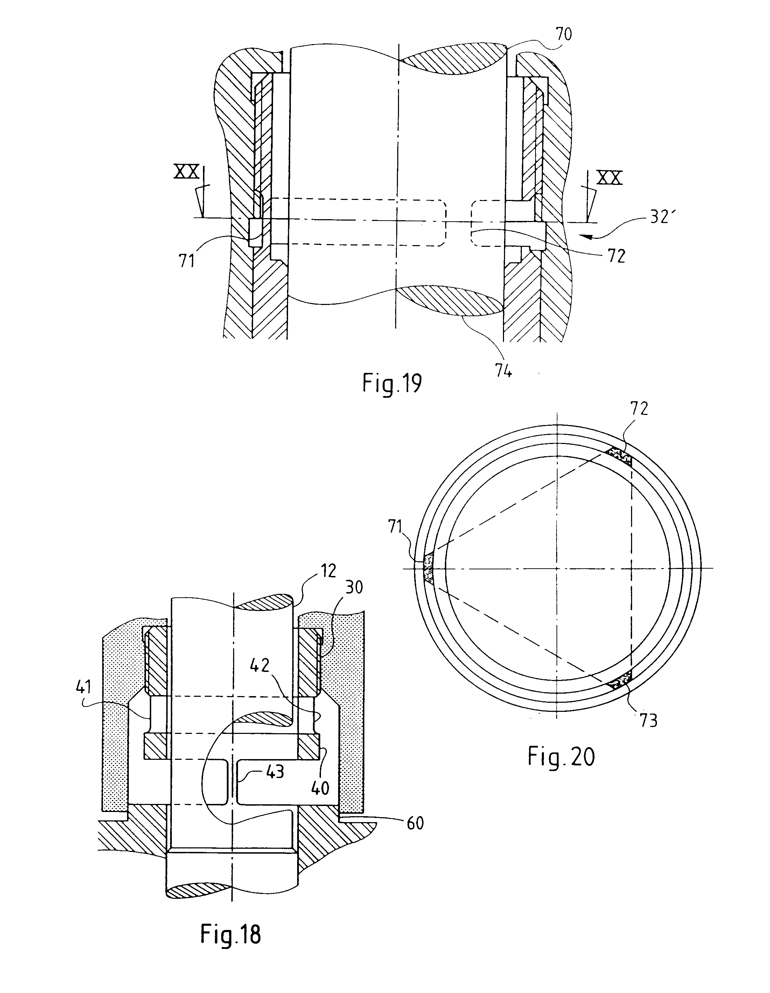

Ce mécanisme 10' se distingue du mécanisme 10 par le fait que l'organe élastique 22' interposé axialement entre une portée annulaire 21' de la chemise 24' et la base de la tige 12' y est constituée par une rondelle BELLEVILLE. La course D' de cette tige est délimitée par cette portée annulaire 21' et un épaulement 34' de la chemise, la base de la tige d'éjection ayant un plus grand diamètre que le reste de la tige. Cette dernière présente un moins grand nombre de tronçons entre cette base et l'ergot terminal 33'. La structure de la zone frangible 32', qui sera détaillée à propos des figures 19 et 20, y est une version simplifiée de celle de la zone 32.

Le détail de la zone frangible 32 prévue sous la zone filetée extérieurement 30 du réceptacle 14 est donné aux figures 7 à 10.

Cette zone frangible a pour objet d'assurer uniquement le maintien longitudinal de l'objet A par rapport à son support, la rigidité de la tige d'éjection 12 étant suffisante pour assurer le maintien de l'objet en cas d'efforts transverses.

Il est même préconisé que cette liaison frangible présente une faible résistance en flexion de manière à ne pas induire par réaction d'efforts transverses sur la tige d'éjection, et de manière à ne pas avoir de composantes en traction ou compression sur les parties à casser.

C'est pourquoi cette liaison frangible est avantageusement élastique en flexion, du type CARDAN avec deux axes transverses de rotation V-V et W-W décalés axialement et disposés à 90 ° l'un par rapport à l'autre.

Cette liaison est matérialisée par une bague intermédiaire 40 respectivement reliée à la zone filetée 30 liée à l'objet A, d'une part, et au reste du réceptacle lié au support B, d'autre part, par deux paires de languettes 41 et 42, 43 et 44 appariées selon des diamètres décalés axialement, et décalés angulairement de 90°. Ces languettes élastiques sont obtenues directement par usinage dans la chemise.

Ces languettes sont dimensionnées à partir du déplacement transversal maximal envisagé pour le centre de gravité de l'objet avant ou pendant l'éjection : leurs hauteurs h (parallèlement à l'axe X-X) et leurs épaisseurs e (perpendiculairement aux diamètres selon lesquels ils sont disposés) sont choisies compte tenue des caractéristiques mécaniques du matériau constitutif de ces languettes, en sorte que ces dernières absorbent ce déplacement sans rupture, de préférence sans déformation plastique.

Ces languettes des deux paires présentent avantageusement le même comportement en flexion (égalité des contraintes de flexion) pour des déplacements transversaux de l'extrémité libre de la tige qui sont égaux selon deux directions radiales perpendiculaires (en pratique selon les diamètres précités).

La mise en équation de cette condition est à la portée de l'homme du métier. Dans le cas où le décalage longitudinal entre les paires de languettes est faible devant la distance de celles-ci au centre de gravité de l'objet (ce que l'on suppose ici), la condition précitée se ramène à dire que les languettes ont toutes des caractéristiques de flexion égales, c'est-à-dire que le rapport e/h² a la même valeur pour chacune d'entre elles.

Dans l'exemple particulièrement simple représenté ici, ces languettes ont avantageusement la même hauteur h et la même épaisseur e.

Toutefois, de manière préférée, pour s'assurer que la rupture de la liaison frangible n'induise aucun moment parasite sur l'objet, on choisit de donner à l'une des paires de languettes, par exemple les languettes 41 et 42 les plus proches de la zone filetée, une dimension radiale y plus faible que pour les languettes de l'autre paire (y') : malgré l'identité de leurs caractéristiques en flexion on introduit ainsi une différence de résistance à la traction entre ces paires, provoquant ainsi la rupture sélective des languettes de l'une seulement de ces paires.

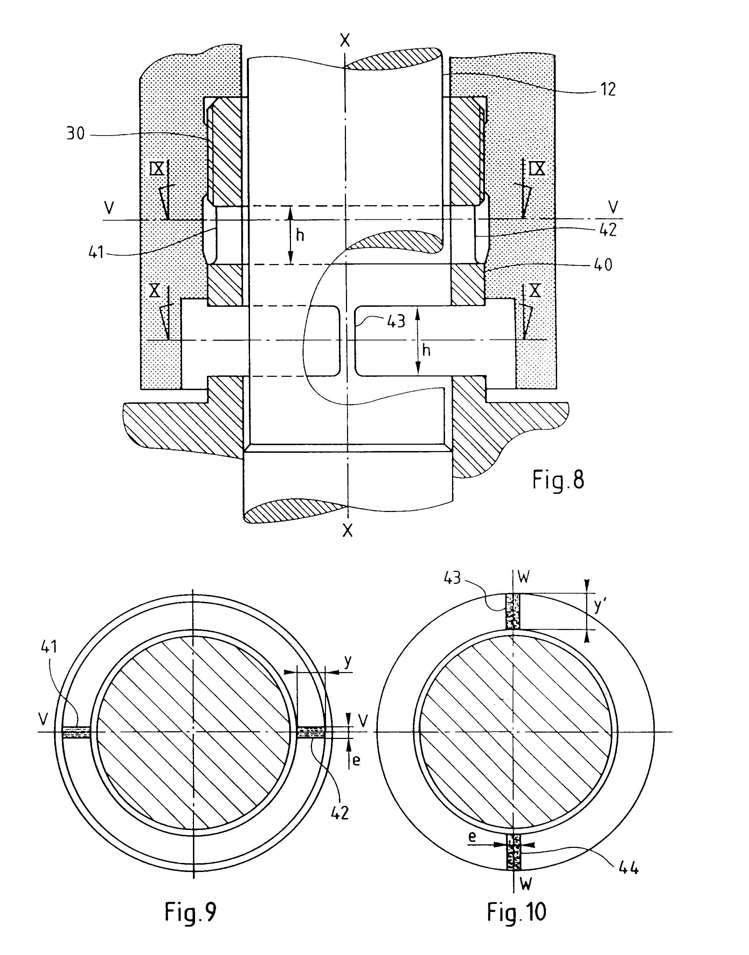

On notera que, en se référant par exemple à la figure 9, le moment d'inertie de la paire de languettes 41 et 42 est supérieur selon l'axe W-W au moment d'inertie de ces mêmes languettes selon l'axe V-V suivant lequel elles sont alignées. Ainsi, les sections résistantes des languettes étant décalées entre les figures 9 et 10, on obtient un dispositif de liaison dont une certaine souplesse peut être garantie approximativement constante en toutes directions.

Cette liaison frangible est ainsi à rupture calibrée en traction, entre le filetage 30 et la bague intermédiaire 40.

Afin que, préalablement à l'éjection, ces languettes ne travaillent qu'en flexion, que lors de l'éjection elles ne travaillent qu'en traction, et pour éviter que les filetages 30 et 31 se desserrent, ces languettes sont maintenues en précontrainte de tension grâce à l'organe élastique 22 qui tend à appliquer la tige d'éjection contre le fond du logement 13 en sollicitant par conséquent lesdites languettes.

Dans l'exemple de la figure 8, le centrage terminal arrière de l'objet est assuré par la bague intermédiaire.

La figure 18 présente une forme préférée de réalisation dans laquelle le centrage terminal arrière est assuré en arrière des deux paires de languettes, par une portée cylindrique 60 directement aménagée sur le corps du réceptacle, rigidement liée à celui-ci, coopérant avec une extrémité élargie du logement 13. De la sorte le centrage arrière ne dépend pas de l'état de flexion de la liaison frangible 32. Cela a notamment pour avantage d'éviter toute vibration du dispositif 10 dans son ensemble, donc de l'objet, pendant la phase de stockage (qui comporte en pratique des phases de transport) et surtout pendant la phase d'éjection elle-même.

Les figures 19 et 20 présentent une version simplifiée de zone de liaison frangible, valable pour des cas où on n'a pas besoin de flexibilité.

Cette version simplifiée comporte un triplet de languettes à casser identiques 71, 72 et 73 (obtenues en pratique par usinage) décalées angulairement les unes par rapport aux autres de 120°, reliant la zone terminale du réceptacle, ici notée 70, au reste 74 de ce réceptacle. De manière préférée ces languettes ont des sections trapézoïdales, avec des côtés qui sont coplanaires avec des côtés des autres languettes respectivement, ainsi que cela est figuré par le triangle (sans sommet) représenté en traits mixtes.

Cette version simplifiée, au lieu de se substituer à la zone 32, peut être intégrée entre celle-ci et la portion terminale 30 (variante non représentée), en donnant aux languettes 41 à 44 des caractéristiques mécaniques identiques en flexion et en traction : on obtient ainsi un étage de flexion (zone 32) et un étage frangible dont les fonctions sont ainsi bien découplées.

Afin de s'affranchir des erreurs géométriques du centrage de l'objet par l'ergot 33 et de l'excentrement inévitable en pratique du centre de gravité G de l'objet par rapport à son axe géométrique X-X, il est apparu avantageux de prévoir autant que possible un rapprochement automatique du point d'application de la poussée au centre de gravité de l'objet.

C'est pour cela que, ainsi qu'il ressort de la figure 13, une rondelle 50 en matériau souple du type élastomère est avantageusement interposé axialement entre un épaulement 51 de la tige d'éjection auprès de son ergot 33 et un épaulement 52 du logement de l'objet auprès de la zone centrale de centrage 14 ; cette rondelle souple maintient un contact réparti et assure ainsi la répartition de la poussée d'éjection sur le fond du logement au plus près du centre de gravité et ramène le barycentre des efforts infinitésimaux auprès du centre de gravité. Cette rondelle peut être une pièce rapportée indépendante, ou être obtenue par surmoulage.

La figure 14A représente a contrario ce qui se passerait en l'absence d'une telle rondelle souple. Du fait de la rigidité de l'ergot et du fond du logement (qui peuvent être en acier, alliage d'aluminium ...) le moindre défaut géométrique conduirait à déplacer le point d'application de l'effort de la valeur du rayon R de la tige d'éjection à cet endroit (figure 14A). La présence d'une rondelle souple de répartition induit par contre une répartition des contraintes dont la résultante n'est alors décalée du centre de gravité que d'une distance d (figure 14B) très inférieure à R dans le cas d'un contact ponctuel sur la périphérie de la zone de poussée. Bien entendu les désaxements envisagés aux figures 14A et 14B sont excessifs, mais ont été choisis comme tels pour visualiser l'explication précitée.

En fait, on aura compris qu'en pratique l'effort de poussée est appliqué ici non pas sur l'ergot lui- même mais par l'épaulement 51 qui le borde, correspondant à la référence 14A de la figure 4.

La figure 15 présente une variante de réalisation ici avec un joint torique 50' en appui entre l'épaulement 51 et un épaulement 52' ici tronconique. Cette variante a les mêmes avantages qu'un joint souple, mais permet en outre une mise en rotation de l'objet par frottement : d'une part l'augmentation du diamètre d'appui permet de mieux transmettre le couple, d'autre part le cône augmente les efforts d'adhérence par décomposition des efforts de poussée (il en résulte un effet de coincement qui favorise l'entraînement).

Les figures 16 et 17 présentent de manière théorique la modélisation possible du comportement de l'objet lors de l'éjection.

L'objet est supposé rigide et caractérisé par sa masse m et par ses moments principaux d'inertie lx, ly et Iz par rapport à un repère Rg (Ox, Oy, Oz). La figure 16 correspond à l'instant t = O et la figure 17 correspond à un état ultérieur :

Pour la phase propulsée, nous supposons que le point F d'application de la force F est fixe au sein du solide et nous étudions l'influence de trois paramètres sur la vitesse transverse et le point de l'objet :
d = distance entre le centre de gravité et le centre de poussée F suivant une direction perpendiculaire à l'axe OZ.
z = distance entre le centre de gravité et le centre de poussée F suivant l'axe OZ.
a = l'angle que fait la verticale OZ du repère galilien et la direction de poussée F̅.

Nous supposons en outre que F̅ et 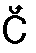 conservent des directions fixes dans le repère galilien Rg tout au long de la poussée : cette hypothèse est (nous semble-t-il) plus physique que celle qui consisterait à prendre F̅ et 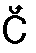 fixes dans le repère objet.

Enfin, nous supposons que le point F̅ est le seul point de contact entre l'axe et l'objet. Le calcul est alors tout à fait représentatif dans le cas des centrages très courts.

Pour la phase balistique, seule la gravitation régit le mouvement. Le mouvement est de type Euler-Poinsot. Il n'y a pas de restriction particulière lors de cette phase.

Les résultats de ce calcul justifient le concept de poussée au plus près du centre de gravité (soit les paramètres d et z les plus petits possibles) ainsi que l'aménagement de deux centrages courts éloignés (un au centre de gravité et un au culot) pour minimiser le paramètre a.

Pour des valeurs données de d et a c'est la position de la poussée au centre de gravité qui minimise la vitesse transverse. Le fait de venir pousser au plus près du centre de gravité et de positionner l'objet par son culot, et, un centrage proche du centre de gravité, permettent de minimiser les erreurs géométriques aussi bien de l'éjecteur que de l'objet et ainsi de minimiser les valeurs de d et de a.

Comme nous l'avons vu dans les paragraphes précédents, le fait de pousser au centre de gravité permet de s'affranchir des conséquences d'un défaut de perpendicularité entre l'axe d'éjection et la butée de fin de course.

Pour ce type de dispositif, c'est l'interface de poussée entre dispositif et objet au niveau du centre de gravité de celui-ci qui est l'élément essentiel vis-à-vis des perturbations transverses. Les solutions technologiques permettant de minimiser le déport d conduisent à des résultats d'essais satisfaisants.

Le sous-ensemble "mécanisme d'éjection" est assemblé à l'aide d'un outillage ; on fait reculer la tige d'éjection jusqu'à amener le ressort de mise en tension à spires jointives. L'objet est alors simplement vissé sur ce sous-ensemble jusqu'à la butée située en fond de filet, sans mise en précontrainte.

Après vérification de la position relative de l'objet par rapport à la chemise, on relâche la tige qui, par l'intermédiaire du ressort, met la liaison en précontrainte, ce qui assure en même temps l'immobilisation en rotation.

Pour effectuer ce montage on peut venir visser, soit l'objet sur le mécanisme d'éjection, soit le mécanisme d'éjection sur l'objet.

La mise en oeuvre du mécanisme de l'invention peut se décrire ainsi :

La mise en oeuvre de l'éjection est commandée, par exemple, par la mise à feu d'un l'inflammateur. Celui-ci, en mettant en pression la chambre de combustion, permet au piston (tige d'éjection) de venir pousser sur l'objet au niveau de l'appui haut situé dans la zone du centre de gravité.

Dans un premier temps, il y a rupture en traction des deux pattes supérieures de la liaison à casser de type cardan et, dans un deuxième temps, l'objet est mis en vitesse.

Dès le début du mouvement, l'objet quitte son centrage bas de façon à ce que le seul interface soit un appui et un centrage au niveau de son centre de gravité.

Il est à noter qu'après rupture de la liaison à casser, sa partie supérieure correspondant à la zone filetée reste solidaire de l'objet (cette masse est faible en pratique).

Pendant le mouvement de translation du piston, le doigt fixé sur la chemise glisse dans la rainure hélicoïdale ou rectiligne pratiquée dans celui-ci qui provoque sa mise en rotation. Cette mise en rotation de l'objet éjecté est obtenue par frottement au niveau de l'interface piston/objet.

Une butée de fin de course assure l'arrêt du piston éjecteur. L'objet se dégage alors de son interface et se retrouve en phase balistique.

Il est à noter que le jeu objet/piston est tel que le dégagement complet de l'objet par rapport au piston se fasse sans contact.

On appréciera que l'interface fonctionnel entre l'objet et le dispositif occupe deux zones distinctes
- au plus près du centre de gravité de l'objet, un interface de poussée et de positionnement comprenant un appui et un centrage,
- au culot de l'objet, un interface de maintien et de positionnement comprenant un filetage et un centrage.

Il ressort de ce qui précède que le mécanisme 10 proposé ci-dessus assure :
- le positionnement et le maintien avec une liaison (de l'objet/dispositif d'éjection) assurant une tenue aux ambiances mécaniques par : une liaison filetée et un centrage court à l'arrière de l'objet, une surface d'appui et un centrage court dans la zone du centre de gravité de l'objet et une précontrainte longitudinale de traction entre le filetage et l'appui du centre de gravité ;
- la séparation objet/éjecteur (fonction déverrouillage) s'effectue par une liaison à casser en traction située sous la liaison filetée (l'énergie de rupture est faible). Ce dispositif particulier de fixation souple est à rupture calibrée en traction ;
- la transmission de l'énergie d'éjection (pyrotechnique) s'effectue par un piston dont la surface d'appui est au voisinage du centre de gravité.

En phase de maintien ou de stockage, la pièce A (objet à éjecter) est positionnée par deux centrages courts et une butée. Elle est bloquée par une pièce de maintien entre le doigt et le centrage bas avec une prétension entre ce maintien et la butée.

De plus la pièce B peut comprendre une liaison type cardan de façon à ce que la tenue en flexion de l'ensemble ne soit supportée que par le doigt et le centrage au niveau du centre de gravité.

En phase d'éjection, la pièce de maintien est supprimée ou escamotée. Le centrage et la butée auprès du centre de gravité restent actifs. Le doigt de poussée appartenant à la pièce B transmet par l'intermédiaire de ce centrage et de cette butée le ou les mouvement(s) de translation et/ou de rotation.

Il va de soi que la description qui précède n'a été proposée qu'à titre d'exemple non limitatif et que de nombreuses variantes peuvent être proposées par l'homme de l'art sans sortir du cadre des revendications.

## Revendications

1. Mécanisme d'assujettissement temporaire d'un objet (A, A') à un support (B, B'), de séparation et d'éjection de cet objet, comportant un réceptacle (11) destiné à être fixé au support et une tige d'éjection (2, 2', 12) montée coulissante dans ce réceptacle selon une direction prédéterminée (X-X), cette tige d'éjection comportant une portion arrière soumise à la pression régnant dans une chambre de pression du réceptacle destinée à être mise en communication avec une source de pression, et une extrémité avant (33) en appui selon la direction prédéterminée contre une portée d'appui (5A, 5'A, 14A, 52) ménagée sur l'objet, caractérisé en ce que :
- cette portée d'appui (5A, 5'A, 14A, 52) est ménagée auprès du centre de gravité (G) de l'objet, au fond d'un logement allongé (4, 4', 13) ménagé dans l'objet, disposé coaxialement avec ladite direction prédéterminée, et dans lequel pénètre la tige d'éjection (2, 2', 12) jusqu'à cette portée d'appui,
- le réceptacle comporte une portion terminale annulaire avant (24A) fixée à l'objet auprès de l'embouchure du logement et raccordée au corps de ce réceptacle par une zone frangible de liaison (32),
- dans l'objet, sont ménagées, d'une part, une zone centrale de centrage avant (5, 5', 14) située au fond du logement et dans laquelle pénètre avec au plus un faible jeu l'extrémité libre (33) de la tige d'éjection, d'autre part une zone terminale de centrage arrière (5, 6', 15) située auprès de l'embouchure du logement et dans laquelle pénètre avec un faible jeu une portion mâle de centrage arrière (3, 3', 40) solidaire du corps du réceptacle.

2. Mécanisme selon la revendication 1, caractérisé en ce que la zone de liaison frangible (32) ménagée entre la portion terminale annulaire avant (24A) du réceptacle fixée à l'objet et le corps de ce réceptacle comporte une bague intermédiaire (40) respectivement reliée à la zone terminale annulaire d'une part, et au corps de réceptacle d'autre part par deux paires de languettes axiales flexibles (41, 42, 43, 44) appariées selon des diamètres décalés angulairement de 90 °, les languettes étant identiques dans chaque paire.

3. Mécanisme selon la revendication 2, caractérisé en ce que les languettes (41, 42) de l'une des paires ont des résistances à la traction égales, inférieures aux résistances à la traction égales des languettes (43, 44) de l'autre paire.

4. Mécanisme selon la revendication 3, caractérisé en ce que les languettes (41, 42) reliant la bague intermédiaire à la zone terminale annulaire avant ont des résistances à la traction égales, inférieures aux résistances à la traction égales des languettes reliant la bague intermédiaire au corps du réceptacle.

5. Mécanisme selon l'une quelconque des revendications 2 à 4, caractérisé en ce que les languettes des deux paires sont dimensionnées en sorte d'avoir le même comportement en flexion pour des déplacements transversaux de l'extrémité libre de la tige d'éjection qui sont égaux selon des directions radiales perpendiculaires.

6. Mécanisme selon l'une quelconque des revendications 2 à 5, caractérisé en ce que les languettes des deux paires ont des caractéristiques de flexion égales autour desdits diamètres selon lesquels ces languettes sont respectivement appariées.

7. Mécanisme selon l'une quelconque des revendications 2 à 6, caractérisé en ce que les languettes desdites deux paires ont une même épaisseur, mesurée transversalement auxdits diamètres et une même hauteur, mesurée parallèlement à la direction prédéterminée.

8. Mécanisme selon la revendication 7, caractérisé en ce que les languettes (41, 42) de l'une des paires ont une même dimension radiale, inférieure à la dimension radiale commune des languettes (43, 44) de l'autre paire.

9. Mécanisme selon l'une quelconque des revendications 2 à 8, caractérisé en ce que la bague intermédiaire (40) et les languettes font partie intégrante d'une partie au moins (24) du corps du réceptacle comportant ladite portion terminale annulaire avant (24A).

10. Mécanisme selon la revendication 1 ou la revendication 2, caractérisé en ce que la zone de liaison frangible comporte un triplet de languettes à casser identiques (71, 72, 73) décalées angulairement de 120°, reliant la portion terminale annulaire avant au corps de réceptacle.

11. Mécanisme selon l'une quelconque des revendications 1 à 10, caractérisé en ce qu'il comporte un organe élastique (22, 22') comprimé axialement entre une collerette (21) prévue à l'intérieur du réceptacle et une portée prévue à la base de la tige d'éjection, mettant ainsi la zone de liaison frangible en précontrainte de traction.

12. Mécanisme selon l'une quelconque des revendications 1 à 11, caractérisé en ce que la portion terminale annulaire avant (24A) du réceptacle comporte une portion filetée extérieurement (30) coopérant avec un filetage interne (31) ménagé à l'embouchure du logement de l'objet.

13. Mécanisme selon l'une quelconque des revendications 1 à 12, caractérisé en ce qu'au travers de la paroi du réceptacle est fixé un ergot (28) de guidage en rotation, pénétrant dans une rainure (29) ménagée approximativement longitudinalement dans la tige d'éjection (2, 2', 12) avec un angle d'inclinaison non nul par rapport à la direction prédéterminée (X-X).

14. Mécanisme selon l'une quelconque des revendications 1 à 13, caractérisé en ce que la tige d'éjection comporte en son extrémité libre un ergot de centrage (33) pénétrant dans la zone centrale de centrage avant (14) prévue au fond du logement de l'objet, venant en saillie par rapport à une portée annulaire (51) en appui contre la zone d'appui (52) du fond du logement.

15. Mécanisme selon l'une quelconque des revendications 1 à 14, caractérisé en ce qu'il comporte une pièce en matière souple (50) interposée entre l'extrémité de la tige d'éjection et la zone d'appui du fond du logement.

16. Mécanisme selon la revendication 15, caractérisé en ce que cette pièce est une rondelle entourant un ergot de centrage (33) ménagé en saillie par rapport à une portée annulaire (51) ménagée à l'extrémité de la tige d'éjection.

17. Mécanisme selon la revendication 16, caractérisé en ce que la rondelle est un joint torique, la zone d'appui (52') au fond du logement étant tronconique.

18. Mécanisme selon l'une quelconque des revendications 1 à 17, caractérisé en ce que le logement (4, 4', 14) est ménagé selon un axe principal d'inertie de l'objet.

19. Mécanisme selon l'une quelconque des revendications 1 à 18, caractérisé en ce que le logement (4, 4', 14) est ménagé selon un axe longitudinal de symétrie géométrique de l'objet.

20. Mécanisme selon l'une quelconque des revendications 1 à 19, caractérisé en ce que la zone centrale de centrage avant (5, 5') a une dimension axiale représentant moins de 50 % de son diamètre intérieur.

21. Mécanisme selon l'une quelconque des revendications 1 à 20, caractérisé en ce que la zone terminale de centrage arrière (6) a une dimension axiale représentant moins de 50 % de son diamètre intérieur.

## Claims

1. Mechanism for temporarily attaching an object (A, A') to a support (B, B'), separating and ejecting said object, comprising a receptacle (11) adapted to be fixed to the support and an ejector rod (2, 2', 12) mounted in said receptacle to slide in a predetermined direction (X-X), said ejector rod comprising a rear portion acted on by the pressure in a pressure chamber of the receptacle adapted to be placed in communication with a pressure source and a front end (33) bearing in the predetermined direction against a bearing surface (5A, 5'A, 14A, 52) provided on the object, characterised in that:
- said bearing surface (5A, 5'A, 14A, 52) is provided near the centre of mass (G) of the object at the bottom of an elongate recess (4, 4', 13) formed in the object, coaxially with said predetermined direction, and into which the ejector rod (2, 2', 12) extends as far as said bearing surface,
- the receptacle comprises a front annular end portion (24A) fixed to the object near the mouth of the recess and joined to the body of said receptacle by a fragile coupling (32),
- in the object there are formed a front centring central area (5, 5', 14) at the bottom of the recess into which the free end (33) of the ejector rod extends with at most a small clearance and a rear end centring area (5, 6', 16) near the mouth of the recess and into which extends with small clearance a rear centring male portion (3, 3', 40) fastened to the body of the receptacle.

2. Mechanism according to claim 1 characterised in that the fragile coupling (32) between the front annular end portion (24A) of the receptacle fixed to the object and the body of said receptacle comprises an intermediate ring (40) joined to the annular end area and to the body of the receptacle by two pairs of flexible axial tangs (41, 42, 43, 44) on respective diameters offset angularly by 90 °, the tangs in each pair being identical.

3. Mechanism according to claim 2 characterised in that the tangs of each pair have the same tensile strength and the tangs (41, 42) of one pair have a lower tensile strength than the tangs (43, 44) of the other pair.

4. Mechanism according to claim 3 characterised in that the tangs of each pair have the same tensile strength and the tangs (41, 42) joining the intermediate ring to the front annular end area have a lower tensile strength than the tangs joining the intermediate ring to the body of the receptacle.

5. Mechanism according to any one of claims 2 to 4 characterised in that the tangs of each pair have dimensions such that they have the same behaviour in bending for equal transverse displacements of the free end of the ejector rod in perpendicular radial directions.

6. Mechanism according to any one of claims 2 to 5 characterised in that the tangs of each pair have the same bending characteristics about said respective diameters.

7. Mechanism according to any one of claims 2 to 6 characterised in that the tangs of each pair have the same thickness measured transversely to said respective diameters and the same height measured parallel to said predetermined direction.

8. Mechanism according to claim 7 characterised in that the tangs of each pair have the same radial dimension and the tangs (41, 42) of one pair have a smaller radial dimension than the tangs (43, 44) of the other pair.

9. Mechanism according to any one of claims 2 to 8 characterised in that the intermediate ring (40) and the tangs are integral parts of at least one part (24) of the body of the receptacle comprising said front annular end portion (24A).

10. Mechanism according to claim 1 or claim 2 characterised in that the fragile coupling comprises three identical tangs (71, 72, 73) designed to fracture and offset angularly by 120 joining the front annular end portion to the body of the receptacle.

11. Mechanism according to any one of claims 1 to 10 characterised in that it further comprises a spring member (22, 22') compressed axially between a flange (21) on the interior of the receptacle and a bearing surface at the base of the ejector rod to stress the fragile coupling in tension.

12. Mechanism according to any one of claims 1 to 11 characterised in that the front annular end portion (24A) of the receptacle comprises an externally screwthreaded portion (30) cooperating with an internal screwthread (31) at the mouth of the recess in the object.

13. Mechanism according to any one of claims 1 to 12 characterised in that a rotation guide peg (28) passes through the wall of the receptacle into an approximately longitudinal groove (29) in the ejector rod (2, 2', 12) with a non-zero inclination angle relative to the predetermined direction (X-X).

14. Mechanism according to any one of claims 1 to 13 characterised in that the ejector rod comprises at its free end a centring peg (33) entering the front centring central area (14) at the bottom of the recess in the object projecting relative to an annular bearing surface (61) bearing against the bearing area (52) at the bottom of the recess.

15. Mechanism according to any one of claims 1 to 14 characterised in that it further comprises a flexible material member (50) disposed between the end of the ejector rod and the bearing area at the bottom of the recess.

16. Mechanism according to claim 15 characterised in that said member is a washer surrounding a centring peg (33) projecting relative to an annular bearing surface (51) at the end of the ejector rod.

17. Mechanism according to claim 16 characterised in that the washer is an O-ring, the bearing area (52') at the bottom of the recess being frustoconical.

18. Mechanism according to any one of claims 1 to 17 characterised in that the recess (4, 4', 14) lies along a main axis of inertia of the object.

19. Mechanism according to any one of claims 1 to 18 characterised in that the recess (4, 4', 14) lies along a longitudinal axis of geometrical symmetry of the object.

20. Mechanism according to any one of claims 1 to 19 characterised in that the front central centring area (5, 5') has an axial dimension less than 50% of its inside diameter.

21. Mechanism according to any one of claims 1 to 20 characterised in that the rear end centring area (6) has an axial dimension less than 50% of its inside diameter.

## Patentansprüche

1. Mechanismus zur zeitlich begrenzten Befestigung eines Objekts (A, A') an einem Träger (B, B') zur Trennung und zur Ausstoßung dieses Objekts, umfassend einen Behälter (11), der dazu bestimmt ist an dem Träger befestigt zu werden, und eine Ausstoßsstange (2, 2', 12'), die in einer vorbestimmten Richtung (X-X) verschiebbar in diesem Behälter montiert ist, wobei diese Ausstoßstange einen hinteren Abschnitt, der dem Druck ausgesetzt ist, der in einer Druckkammer des Behälters herrscht, die dazu bestimmt ist, mit einer Druckquelle in Verbindung gesetzt zu werden, und ein vorderes Ende (33) besitzt, das in der vorbestimmten Richtung an einer an dem Objekt vorgesehenen Auflagefläche (5A, 5'A, 14A, 52) in Anlage ist, dadurch gekennzeichnet, daß
- diese Auflagefläche (5A, 5'A, 14A, 52) bei dem Schwerpunkt (G) des Objekts am Boden einer in dem Objekt ausgesparten länglichen Aussparung (4, 4', 13) vorgesehen ist, die koaxial zu dieser vorbestimmten Richtung angeordnet ist und in die die Ausstoßstange (2, 2', 12) bis zu dieser Auflagefläche eintritt,
- der Behälter einen ringförmigen vorderen Endabschnitt (24A) besitzt, der am Objekt bei der Mündung der Aussparung befestigt ist und mit dem Körper dieses Behälters durch eine durchbrechbare Verbindungszone (32) verbunden ist,
- in dem Objekt einerseits eine vordere zentrale Zentrierungszone (5, 5', 14), die am Boden der Aussparung gelegen ist und in die mit höchstens einem geringen Spiel das freie Ende (33) der Ausstoßstange eintritt, und andererseits eine hintere Zentrierungsendzone (5, 6', 15) ausgespart sind, die bei der Mündung der Aussparung gelegen ist und in die mit einem geringen Spiel ein hervorstehender hinterer Zentrierungsabschnitt (3, 3', 40) eintritt, der mit dem Körper des Behälters fest verbunden ist.

2. Mechanismus nach Anspruch 1, dadurch gekennzeichnet, daß die durchbrechbare Verbindungszone (32), die zwischen dem am Objekt befestigten vorderen ringförmigen Endabschnitt (24A) des Behälters und dem Körper dieses Behälters vorgesehen ist, einen Zwischenring (40) besitzt, der jeweils mit der ringförmigen Zone einerseits und mit dem Behälterkörper andererseits durch zwei Paare von axialen flexiblen Zungen (41, 42, 43, 44) verbunden ist, die gemäß winkelmäßig um 90 versetzten Durchmessern gepaart sind, wobei die Zungen in jedem Paar gleich ausgebildet sind.

3. Mechanismus nach Anspruch 2, dadurch gekennzeichnet, daß die Zungen (41, 42) des einen der Paare gleiche Zugfestigkeiten haben, die kleiner als die gleichen Zugfestigkeiten der Zungen (43, 44) des anderen Paars sind.

4. Mechanismus nach Anspruch 3, dadurch gekennzeichnet, daß die Zungen (41, 42), die den Zwischenring mit der vorderen ringförmigen Endzone verbinden, gleiche Zugfestigkeiten haben, die kleiner als die gleichen Zugfestigkeiten der Zungen sind, die den Zwischenring mit dem Körper des Behälters verbinden.

5. Mechanismus nach einem der Ansprüche 2 bis 4, dadurch gekennzeichnet, daß die Zungen der beiden Paare so dimensioniert sind, daß sie dasselbe Biegungsverhalten bei Querbewegungen des freien Endes der Ausstoßstange haben, die in senkrechten radialen Richtungen gleich sind.

6. Mechanismus nach einem der Ansprüche 2 bis 5, dadurch gekennzeichnet, daß die Zungen der beiden Paare gleiche Biegungsmerkmale um diese Durchmesser herum haben, gemäß denen diese Zungen jeweils gepaart sind.

7. Mechanismus nach einem der Ansprüche 2 bis 6, dadurch gekennzeichnet, daß die Zungen dieser beiden Paare eine gleiche Dicke, quer zu diesen Durchmessern gemessen, und eine gleiche Höhe, parallel zur vorbestimmten Richtung gemessen, haben.

8. Mechanismus nach Anspruch 7, dadurch gekennzeichnet, daß die Zungen (41, 42) des einen der Paare eine gleiche radiale Abmessung haben, die kleiner als die gemeinsame radiale Abmessung der Zungen (43, 44) des anderen Paars ist.

9. Mechanismus nach einem der Ansprüche 2 bis 8, dadurch gekennzeichnet, daß der Zwischenring (40) und die Zungen integrierenden Bestandteil mindestens eines Teils (24) des diesen vorderen ringförmigen Endteil (24A) aufweisenden Körpers des Behälters bilden.

10. Mechanismus nach Anspruch 1 oder Anspruch 2, dadurch gekennzeichnet, daß die durchbrechbare Verbindungszone ein Triplett von gleichen zu durchbrechenden Zungen (71, 72, 73) besitzt, die winkelmäßig um 120 versetzt sind und den vorderen ringförmigen Endabschnitt mit dem Behälterkörper verbinden.

11. Mechanismus nach einem der Ansprüche 1 bis 10, dadurch gekennzeichnet, daß er ein elastisches Organ (22, 22') besitzt, das axial zwischen einem im Inneren des Behälters vorgesehenen Kragen (21) und einer an der Basis der Ausstoßstange vorgesehenen Auflagefläche axial komprimiert ist und so die durchbrechbare Verbindungszone unter Zugvorspannung setzt.

12. Mechanismus nach einem der Ansprüche 1 bis 11, dadurch gekennzeichnet, daß der vordere ringförmige Endteil (24A) des Behälters einen mit Außengewinde versehenen Abschnitt (30) besitzt, der mit einem Innengewinde (31) zusammenwirkt, das an der Mündung der Aussparung des Objekts vorgesehen ist.

13. Mechanismus nach einem der Ansprüche 1 bis 12, dadurch gekennzeichnet, daß in der Wand des Behälters ein Bolzen (28) zur Führung bezüglich Drehung vorgesehen ist, der in eine Nut (29) eintritt, die in der Ausstoßstange (2, 2', 12) annähernd in Längsrichtung mit einem Neigungswinkel von nicht null zu der vorbestimmten Richtung (X-X) angeordnet ist.

14. Mechanismus nach einem der Ansprüche 1 bis 13, dadurch gekennzeichnet, daß die Ausstoßstange an ihrem freien Ende einen Zentrierstift (33) besitzt, der in die vordere zentrale Zentrierzone (14), die am Boden der Aussparung des Objekts vorgesehen ist, eintritt und bezüglich einer ringförmigen Auflagefläche (51) hervorsteht, die an der Auflagezone (52) des Bodens der Aussparung aufliegt.

15. Mechanismus nach einem der Ansprüche 1 bis 14, dadurch gekennzeichnet, daß er ein Teil (50) aus biegsamem Werkstoff besitzt, das zwischen das Ende der Ausstoßstange und die Auflagezone des Bodens der Aussparung eingesetzt ist.

16. Mechanismus nach Anspruch 15, dadurch gekennzeichnet, daß dieses Teil eine Scheibe ist, die einen Zentrierstift (33) umgibt, der bezüglich einer ringförmigen Auflagefläche (51) hervorsteht, die am Ende der Ausstoßstange vorgesehen ist.

17. Mechanismus nach Anspruch 16, dadurch gekennzeichnet, daß die Scheibe ein Wulstring ist, wobei die Auflagezone (52') am Boden der Aussparung kegelstumpfförmig ist.

18. Mechanismus nach einem der Ansprüche 1 bis 17, dadurch gekennzeichnet, daß die Aussparung (4, 4', 14) in einer Hauptträgheitsachse des Objekts angeordnet ist.

19. Mechanismus nach einem der Ansprüche 1 bis 18, dadurch gekennzeichnet, daß die Aussparung (4, 4', 14) in einer geometrischen Längssymmetrieachse des Objekts angeordnet ist.

20. Mechanismus nach einem der Ansprüche 1 bis 19, dadurch gekennzeichnet, daß die vordere zentrale Zentrierungszone (5, 5') eine axiale Abmessung hat, die weniger als 50 % ihres Innendurchmessers darstellt.

21. Mechanismus nach einem der Ansprüche 1 bis 20, dadurch gekennzeichnet, daß die hintere Zentrierungsendzone (6) eine axiale Abmessung hat, die weniger als 50 % ihres Innendurchmessers darstellt.
